# EUROPEAN PATENT APPLICATION

(11) **EP 2 400 450 A1**
(43) Date of publication of application: **28.12.2011**
(21) Application number: 11167298.6
(22) Date of filing: 24.05.2011
(51) Int. Cl.: G06Q 30/00, G06F 17/30, G01C 21/00

(54) **Method of operating a navigation system to block unwanted advertisements**

(30) Priority: 23.06.2010 US 821450
(71) Applicant: Navteq North America, LLC, Chicago, Illinois 60606 (US)
(72) Inventor: Tielens, Bart, 4191TP, Geldermalsen (NL)
(74) Representative: Pelly, Jason Charles

(57) **Abstract**

A method of operating a navigation system to block advertising messages is disclosed. A spatially based advertising filtering parameter defining a portion of a geographic region and an advertising message are obtained. A current location of the navigation system and a location of a business associated with the advertising message are identified. The method determines whether the location of the business is located outside of the portion of the geographic region defined by the spatially based advertising filtering parameter. If so, presentation of the advertising message is blocked.

## Description

### BACKGROUND OF THE INVENTION

The present invention relates to a method and system for operating a navigation system, and more particularly to a method and system for blocking unwanted location-based advertisements.

Navigation systems are available that provide end users with various navigation-related functions and features. For example, some navigation systems are able to determine an optimum route to travel along a road network or a pedestrian network from an origin location to a destination location in a geographic region. Using input from the end user, the navigation system can examine various potential routes between the origin and destination locations to determine the optimum route. The navigation system may then provide the end user with information about the optimum route in the form of guidance that identifies the maneuvers required to be taken by the end user to travel from the origin to the destination location. Some navigation systems are able to show detailed maps on displays outlining the route, the types of maneuvers to be taken at various locations along the route, locations of certain types of features, and so on.

In order to provide these and other navigation-related functions and features, navigation systems use geographic data. The geographic data may be in the form of one or more geographic databases that include data representing physical features in the geographic region. The geographic database includes information about the represented geographic features, such as one-way streets, position of the roads, speed limits along portions of roads, address ranges along the road portions, turn restrictions at intersections of roads, direction restrictions, such as one-way streets, and so on. Additionally, the geographic data may include points of interests, such as businesses, facilities, restaurants, hotels, airports, gas stations, stadiums, police stations, and so on.

Although navigation systems provide many important features, there continues to be room for new features and improvements. One area in which there is room for improvement relates to receiving and presenting advertisements to the end user of the navigation system. Advertising systems may send advertisements to navigation system based on the location of the navigation system. Although, the user of the navigation system may be interested in some of the advertisements, it would be beneficial to allow the end user to block unwanted advertisements.

### SUMMARY OF THE INVENTION

To address these and other objectives, the present invention comprises a method for operating a navigation system to block advertising messages. The method obtains a spatially based advertising filtering parameter defining a portion of a geographic region and an advertising message. The method identifies a current location of the navigation system and a location of a business associated with the advertising message. The method determines whether the location of the business is located outside of the portion of the geographic region defined by the spatially based advertising filtering parameter. If so, a presentation of the advertising message is blocked.

According to another aspect, the present invention comprises a navigation system. The navigation system comprises a processor, a geographic database associated with the processor, and an advertising filtering program executed on the processor. The advertising filtering program blocks a presentation of an advertising message for a point of interest according to a filtering parameter.

According to a further aspect, the present invention comprises a method for operating a computer platform to block advertising messages. The method obtains a filtering parameter defining a spatial filter and an advertising message. The method identifies a location of a business associated with the advertising message. The method determines whether the location of the business is located outside of the spatial filter region. If so, a presentation of the advertising message is blocked.

According to an aspect of the invention, there is provided a computer implemented method of operating a navigation system to block advertising messages, the method comprising: obtaining a spatially based advertising filtering parameter defining a portion of a geographic region; identifying a current location of the navigation system; obtaining an advertising message; identifying a location of a business associated with the advertising message; determining whether the location of the business is located outside of the portion of the geographic region defined by the spatially based advertising filtering parameter; and if so, blocking a presentation of the advertising message.

The spatially based advertising filter parameter may specify an administrative district.

The spatially based advertising filter parameter may specify a distance from a current position of the navigation system.

The spatially based advertising filter parameter may specify a distance from a specified location.

The spatially based advertising filter parameter may be defined by a user of the navigation system.

The advertising message may include an identifier of the business associated with the advertising message.

The advertising message may include an identifier of the location of the business associated with the advertising message.

Another filter parameter may be category or temporally based.

The advertising message may be obtained without a request from the navigation system.

The advertising message may be obtained after a request from the navigation system.

According to an aspect of the invention, there is provided a navigation system comprising: a processor, a geographic database associated with the processor, and an advertising filtering program executed on the processor, wherein the advertising filtering program blocks a presentation of an advertising message for a point of interest according to a filtering parameter.

The filtering parameter may include at least one from a group comprising: a spatially based filter parameter, a category based filter parameter and a time based filter parameter.

In one embodiment, the spatially based filter parameter specifies a distance from a current position of the navigation system and the advertising message for the point of interest located a distance greater from the current position than the specified distance is blocked by the advertising filtering program.

The filter parameter may defined by a user of the navigation system.

The advertising message may include an identifier of the point of interest associated with the advertising message.

The advertising message may include an identifier of the location of the point of interest associated with the advertising message.

According to an aspect of the invention, there is provided a method of operating a computer platform to block advertising messages, the method comprising: obtaining a filtering parameter defining a spatial filter region; obtaining an advertising message; dentifying a location of a business associated with the advertising message; determining whether the location of the business is located outside the spatial filter region; and if so, blocking a presentation of the advertising message.

The filter parameter may be defined by a user of the computer platform.

Another filter parameter may be category or temporally based.

The advertising message may be obtained with or without a request from the computer platform.

### BRIEF DESCRIPTION OF THE DRAWINGS

An exemplary embodiment of the present invention is described herein with reference to the following drawings.
Figure 1 is a block diagram of an advertising system, according to an exemplary embodiment.
Figure 2 is a block diagram of the advertising system depicted in Figure 1 and a navigation system, according to an exemplary embodiment.
Figure 3 is a block diagram of a geographic database.
Figure 4 is a flow chart for blocking unwanted advertisement messages.
Figure 5 is a block diagram of an advertisement message.
Figure 6 is a representation of a portion of a geographic region.
Figure 7 is a representation of a portion of a geographic region.

### DETAILED DESCRIPTION OF THE

### PRESENTLY PREFERRED EMBODIMENTS

### I. Advertisement System Overview

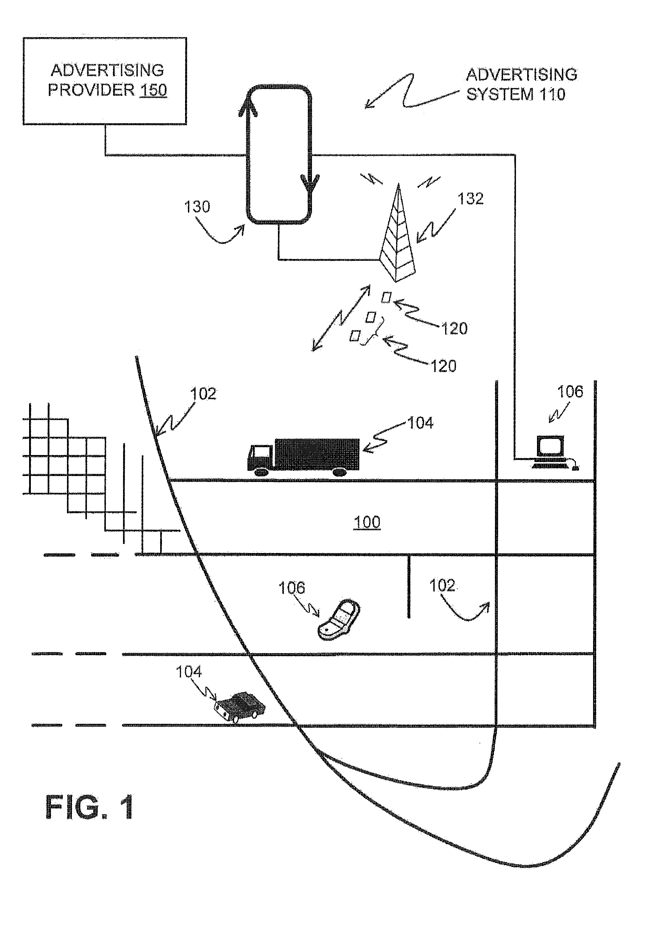

Figure 1 is diagram illustrating a region 100. The region 100 may be a metropolitan area, such as the New York metropolitan area, the Los Angeles metropolitan area, or any other metropolitan area. Alternatively, the region 100 may be a state, province, or country, such as California, Illinois, France, England, or Germany. Alternatively, the geographic region 100 can be a combination of one or more metropolitan areas, states, countries, and so on. Located in the region 100 are a road network and a pedestrian network 102. The road network 102 provides a series of connected road segments and intersections. Additionally, the region 100 includes a pedestrian network comprising sidewalks and pedestrian paths.

An advertising system 110 is also located in the region 100. The advertising system 110 broadcasts data 120 regarding advertisements for points of interests, such as businesses and facilities including retail stores, restaurants, entertainment facilities, and so on, located in the region 100, sometimes referred to as advertising messages ("advertising messages" herein after). The advertising system 110 may be operated by an advertising provider 150.

Vehicles 104 travel on the road network 102 in the region 100. The vehicles 104 may include a variety of cars, trucks, and motorcycles. Some or all of the vehicles 104 include suitable equipment that enables them to receive the data 120 sent by the advertising system 110. The data 120 broadcast from the advertising system 110 may also be received and used in systems 106 that are not installed in vehicles (referred to herein as "non-vehicle systems") some of which may be carried by pedestrians traveling on the pedestrian network. These non-vehicle systems 106 may include workstations, personal computers, personal digital assistants, networks, pagers, televisions, radio receivers, mobile telephones, and so on. The non-vehicle systems 106 may receive the data 120 in the same manner as the vehicles. Alternatively, the vehicles 104 and the non-vehicle systems 106 may receive the data 120 by other means, such as over telephone lines, over the Internet, via cable, and so on. The systems in the vehicles 104 and the non-vehicle systems 106 that receive the data 120 may include various different computing platforms.

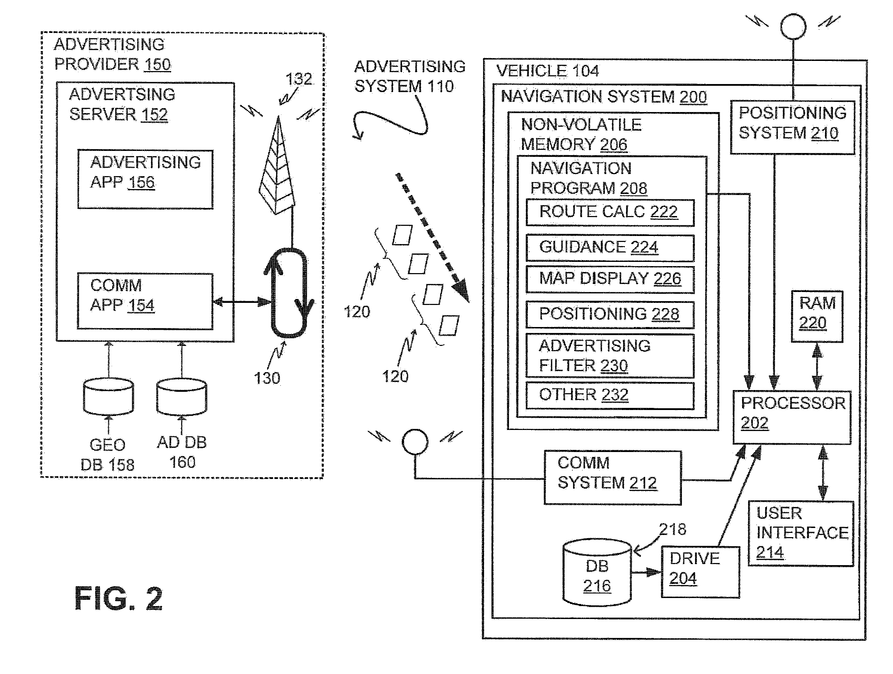

Figure 2 shows the components of the advertising system 110 and one of the vehicles 104 shown in Figure 1. The advertising system 110 provides for the creation and the formatting of the advertising messages 120, and the transmission of these advertising messages 120 to the vehicles 104 and non-vehicles 106 in the region 100. The advertising system 110 includes equipment and programming for creating, formatting and transmitting the advertising messages. Included among the equipment and programming of the advertising system 110 is an advertising server 152. The advertising server 152 includes appropriate computer hardware and software to run network applications. The advertising server 152 is maintained and operated by the advertising provider 150.

Referring to Figure 2, server applications are included on the advertising server 152. The server applications may be stored on one or more hard drive(s) or other computer readable media operated by the server 152 and loaded into a memory of the server 152 to run. One of the server applications is a communications application 154. The communications application 154 interfaces with a data network 130 in order to receive messages from and send messages to the vehicle systems 104 and non-vehicle systems 106.

The advertising system 110 also includes suitable equipment and programming for transmitting the advertising messages 120 to the vehicles 104 and non-vehicles 106 and exchanging messages with the vehicles 104 and non-vehicles 106. The equipment and programming includes interfaces to transmitters, programming that communicates advertising messages to the transmitters, programming that receives request messages and prepares response messages, and so on.

The advertising system 110 also includes transmission equipment. This equipment may comprise one or more FM, AM, DAB, DRM or other transmitters, including antennas, or other wireless transmitters. This equipment provides for the transmission of the advertising messages 120. This equipment may be part of the advertising system 110, or alternatively, the advertising system 110 may use transmission equipment from other types of systems, such as cellular or paging systems, FM radio stations, and so on, to transmit the advertising message 120 to the vehicles 104 and non-vehicles 106. The transmission of advertising messages 120 includes any form of transmission, including direct wireless transmission. The data network 130 may use any suitable technology and/or protocols that are currently available, as well as technology and/or protocols that become available in the future. For example, the data network may use WAP, TCP/IP, etc. More than one protocol may be used in the data network 130 with appropriate conversions. The data network 130 may be part of, or connected to, the Internet.

A portion of the network 130 may include a wireless portion 132. The wireless portion 132 of the data network 130 enables two-way communication between the vehicles 104 and non-vehicles 106 and the advertising provider 150. The wireless portion 132 may be implemented by any suitable form of wireless communication, including cellular, PCS, satellite, FM, radio, or technologies that may be developed in the future. The wireless portion 132 may include one or more transmitters, such as a transponder tower, an antenna tower, an FM tower, satellites, or other suitable means. The transmitters include an appropriate communication link to the network 130 and/or advertising provider 150. This link may be land-based or may be wireless. The transmitters include suitable technology that enables one-way or two-way communication between the advertising provider 150 and the vehicles 104 or non-vehicles 106.

Referring to Figure 2, another one of the server applications is an advertising application 156. The advertising application 156 creates and formats the advertising messages 120. Associated with the advertising server 152 is a geographic database 158. The geographic database 158 includes data representing the road network 102 and the pedestrian network in the geographic region 100. The geographic database 158 includes data representing road segments, sidewalks, pedestrian paths and intersections located in the geographic region100. The geographic database 158 also includes data representing points of interest located in the geographic region 100. Points of interest include businesses, facilities, restaurants, retail stores, hotels, gas stations, and so on. Information stored in the geographic database representing a point of interest includes a facility type, name, telephone number, business hours, address, chain name, type of point of interest, location, and so on. The geographic database 158 is stored on a computer readable storage medium that is accessible to the advertising server 152. The computer readable storage medium may include one or more hard drives or other storage media. In one embodiment, the geographic database 158 is developed by NAVTEQ North America, LLC of Chicago, Illinois. However, it is understood that the inventive concepts disclosed herein are not restricted to any particular source of data.

Referring to Figure 2, associated with the advertising server 152 is an advertisement database 160. The advertisement database 160 includes data representing advertisements and data representing advertising campaigns. The data representing advertisements include content of the advertisements such as text, audio, images, video and other formats for the advertisements. For example, the content of the advertisement includes an audio message of "Are you hungry? Enjoy 10% off of your visit to Joe's Diner" and a text coupon code. Data representing the advertising campaign indicates when the advertising message should be delivered, such as only between certain hours of the day, only on certain days of the week, etc. Data representing the advertising campaign indicates where the advertising message should be delivered, such as to any vehicle or non-vehicle in the geographic region, to vehicles and non-vehicle located in a defined portion of the geographic region, such as within a region defined by a polygon or a circle centered on defined point location, and so on. Data representing the advertising campaign indicates to whom the advertising message should be delivered, such as every vehicle or non-vehicle, only vehicles and non-vehicles whose users meet defined demographic information, and so on. Data representing the advertising campaign indicates any restrictions for delivering the advertising messages, e.g., only once, only between certain hours of the day, only on certain days of the week, and so on. Data representing the advertising campaign identifies the point of interest associated with the advertising message, such as an ID of a point of interest that identifies the point of interest represented in the geographic database 158. Data representing the advertising campaign identifies the location of the point of interest associated with the advertising message, such as an address, latitude and longitude position, or other location reference system.

Figure 2 also depicts the components of one of the vehicles 104 shown in Figure 1. A navigation system 200 is installed in the vehicle 104 or associated with the vehicle 104. The navigation system 200 is a combination of hardware and software components. In one embodiment, the navigation system 200 includes a processor 202, a drive 204 connected to the processor 202, and a non-volatile memory storage device 206 for storing a navigation application software programs 208 and possibly other information. The processor 202 may be any type of processor suitable for navigation systems.

The navigation system 200 may also include a positioning system 210. The positioning system 210 may utilize GPS-type technology, a dead reckoning-type system, or combinations of these or other systems. The positioning system 210 may include suitable sensing devices that measure the traveling distance, speed, direction, and so on, of the vehicle 104. The positioning system 210 may also include appropriate technology to obtain a GPS signal. The positioning system 210 outputs a signal to the processor 202. The signal from the positioning system 210 may be used by the navigation application software 208 that is run on the processor 202 to determine the location, direction, speed, and so on, of the navigation system 200.

The vehicle 104 includes a communication system 212. The communication system 212 enables the navigation system 200 to receive advertising messages 120 from the advertising provider 150. In one embodiment, the communication system 212 includes a receiver that receives the advertising messages 120 from the advertising system 110. For example, the receiver may be an FM receiver tuned to the appropriate frequency at which the advertising system 110 is using to broadcast the advertising messages 120. As another example, when the advertising messages 120 are sent by direct wireless transmission, such as cellular wireless transmission, the receiver in the communication system 212 may be similar or identical to a cellular telephone. The communication system 212 provides an output to the processor 202 so that appropriate programming in the navigation system 200 can utilize the advertising messages 120 transmitted by the advertising system 110. In another embodiment, the communication system 212 enables two way communications with the adverting server 152. For example, the communication system 212 enables the navigation system 200 to send request messages, such as for a local search for a type of facility.

Returning to Figure 2, the navigation system 200 also includes a user interface 214. The user interface 214 includes appropriate equipment that allows the end-user (e.g., the driver or passengers) to input information into the navigation system 200. This input information may include a request to use the navigation features of the navigation system 200. For example, the input information may include a request for a route to a desired destination, such as a point of interest. The input information may also include requests for other kinds of information. The user interface equipment used to input information into the navigation system 200 may include a keypad, a keyboard, a microphone, and so on, as well as appropriate software, such as a voice recognition program. The user interface 214 also includes suitable equipment that provides information to the end user, such as presenting the content of the advertising messages. This equipment may include a display, speakers and other communication means.

The navigation system 200 uses a map database 216 stored on a computer readable storage medium 218. The storage medium 218 is installed in the drive 204 so that the map database 216 can be read and used by the navigation system 200. The storage medium 218 may be removable and replaceable so that a storage medium with an appropriate map database for the geographic region in which the vehicle is traveling can be used. In addition, the storage medium 218 may be replaceable so that the map database 216 on it can be updated easily. In one embodiment, the geographic data 216 may be a geographic database published by NAVTEQ North America, LLC of Chicago, Illinois.

In one embodiment, the storage medium 218 is a CD ROM disk. In an alternative embodiment, the storage medium 218 may be a PCMCIA card in which case the drive 114 would be substituted with a PCMCIA slot. Various other storage media may be used, including fixed or hard disks, DVD disks, or other currently available storage media, as well as storage media that may be developed in the future. The storage medium 218 and the geographic database 216 do not have to be physically provided at the location of the navigation system 200. In alternative embodiments, the storage medium 218, upon which some or all of the geographic data 216 are stored, may be located remotely from the rest of the navigation system 200 and portions of the geographic data provided via a communications link, as needed.

In one type of system, the navigation application software programs 208 are loaded from the non-volatile memory 206 into a Random Access Memory ("RAM") 220 associated with the processor 202 in order to operate the navigation system 200. The processor 202 also receives input from the user interface 214. The input may include a request for navigation information. The navigation system 200 uses the map database 216 stored on the storage medium 218, possibly in conjunction with the outputs from the positioning system 210 and the communication system 212, to provide various navigation features and functions.

The navigation application software program 208 may include separate applications (or subprograms) that provide these various navigation features and functions. These functions and features may include route calculation 222 (wherein a route to a destination identified by the end-user is determined), route guidance 224 (wherein detailed directions are provided for reaching a desired destination), map display 226, and vehicle positioning 228 (i.e., map matching). Also included with the navigation application software program 208 is an advertising filtering application 230 for blocking unwanted location-based advertisements that will be described in detail below. Other functions and programming 232, in addition to these, may be included in the navigation system 200. The navigation application program 208 may be written in a suitable computer programming language such as C, although other programming languages, such as C++ or Java, are also suitable.

Although the above described embodiment for the navigation system 200 shows the navigation system associated with or installed in a vehicle 104, the navigation system 200 may also be associated with a non-vehicle system 106, such as a mobile phone, personal computer, and so on. For the embodiments with the navigation system associated with a non-vehicle system, the navigation system may share hardware and software components with the computer platforms of the non-vehicle system.

In alternative embodiments, the navigation system 200 includes local components, located physically with an end user, that communicate with remote components, located remotely from the end user. In this embodiment, the remote components include a navigation services server. The navigation application software programs 208 and the geographic database 216 reside with the navigation server. The local components of the navigation system communicate with the remote components via a communication link and the communication system 212. The communication link may use any suitable technology and/or protocols that are currently available, as well as technology and/or protocols that become available in the future. A portion of the communications link may include a wireless portion that enables two-way communication between the local components and the remote components. The wireless portion may be implemented by any suitable form of wireless communication, including cellular, PCS, satellite, FM, radio, Bluetooth®, other long and short range transmission technologies or technologies that may be developed in the future.

### II. Geographic Database

In order to provide navigation-related features and functions to the end user, the navigation system 200 uses the geographic database 216. The geographic database 216 includes information about one or more geographic regions. The geographic region may correspond to a metropolitan or rural area, a state, a country, or combinations thereof, or any other area. Located in the geographic region are physical geographic features, such as roads, points of interest (including businesses, municipal facilities, etc.), lakes, rivers, railroads, municipalities, etc.

The road network includes, among other things, roads and intersections located in the geographic region. Each road in the geographic region is composed of one or more road segments; a road segment represents a portion of the road. Each road segment is associated with its two nodes; one node represents the point at one end of the road segment and the other node represents the point at the other end of the road segment. The node at either end of a road segment may correspond to a location at which the road meets another road, i.e., an intersection, or where the road dead-ends. The road segments may include sidewalks and crosswalks for travel by pedestrians. The geographic region also includes points of interest, such as businesses, facilities, restaurants, hotels, gas stations, retail stores, stadiums, police stations, and so on.

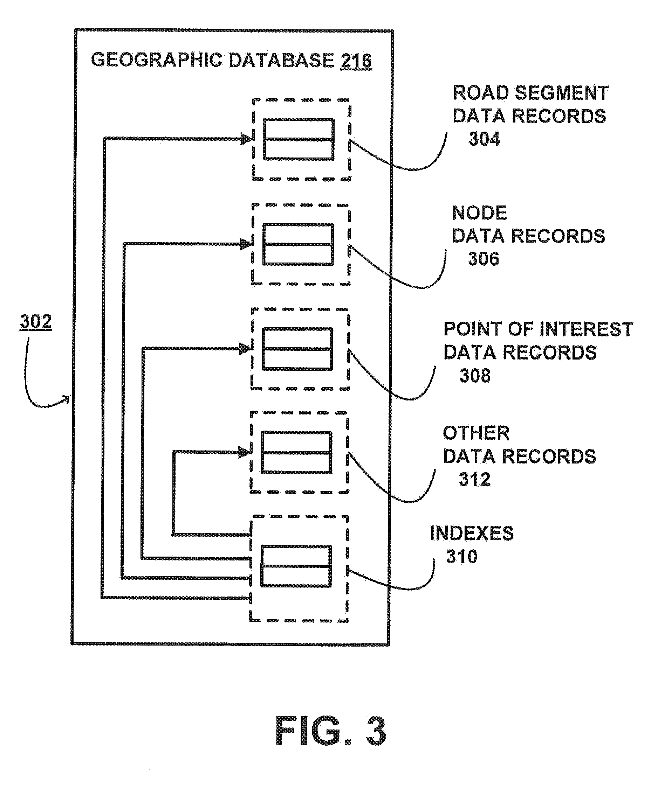

Referring to Figure 3, the geographic database 216 contains data 302 that represents some of the physical geographic features in the geographic region. The data 302 contained in the geographic database 116 includes data that represent the road network for travel by vehicles and the network for travel by pedestrians. In the embodiment of Figure 3, the geographic database 116 that represents the geographic region contains at least one road segment data record 304 (database record may also be referred to as "entity" or "entry") for each road segment 204 in the geographic region. The geographic database 216 that represents the geographic region also includes a node data record 306 for each node in the geographic region. The terms "nodes" and "segments" and "links" represent only one terminology for describing these physical geographic features, and other terminology for describing these features is intended to be encompassed within the scope of these concepts.

The road segment data record 304 includes a segment ID by which the data record can be identified in the geographic database 216. Each road segment data record 304 has associated with it information (such as "attributes", "fields", etc.) that describes features of the represented road segment. The road segment data record 304 may include data that indicate a speed limit or speed category (i.e., the maximum permitted vehicular speed of travel) on the represented road segment. The road segment data record 304 may also include data that indicate a classification such as a rank of a road segment that may correspond to its functional class that indicates whether the road segment is a highway, residential road and so on. The road segment data record 304 may also include data that indicate a sidewalk associated with the road segment.

The road segment data record 304 may also include or be associated with other data that refer to various other attributes of the represented road segment. The various attributes associated with a road segment may be included in a single road segment record, or may be included in more than one type of record which cross-references to each other. For example, the road segment data record 304 may include data identifying the number of lanes and the width of the lanes comprising the road segment. The other data may indicate what turn restrictions exist at each of the nodes which correspond to intersections at the ends of the road portion represented by the road segment, the name or names by which the represented road segment is known, the length of the road segment, the street address ranges along the represented road segment, the permitted direction of vehicular travel on the represented road segment, whether the represented road segment is part of a controlled access road (such as an expressway), a ramp to a controlled access road, a bridge, a tunnel, a toll road, a ferry, and so on.

The road segment data record 304 also includes data identifying the endpoints of the road segment and the location (e.g., the latitude and longitude) of the endpoints. In one embodiment, the endpoint data references node data records 306 defined for the nodes corresponding to the endpoints of the represented road segment. By convention, each road segment is considered to have a "reference" or "left" endpoint and a "non-reference" or "right" endpoint. The left endpoint may be the node having greater longitudinal coordinates, or in the case in which the longitudinal coordinates are the same, the node having the lesser latitude. Of course, which node is defined as the left or right endpoints can be alternatively defined. Each node data record 306 includes a node ID by which the record can be identified in the geographic database 216. The node data record 306 also includes data identifying the geographic coordinates (e.g., the latitude, longitude, and optionally altitude) of the represented node. The node data record 306 also includes data identifying road segments that connect to the node to form an intersection. For example, a node identified by a node may represent an intersection of two roads. At the intersection, each of the two roads may be represented by two road segments (located on opposite sides of the center of the intersection) each having an endpoint at the node. In this example of a standard four-way intersection, the connecting segment data includes four segments IDs identifying the four road segments that connect to the node to form the intersection. The node data record 306 may also include other data that refer to various other attributes of the nodes, such as the presence of a crosswalk.

The geographic database 216 also contains point of interest data records 308 that represent points of interest, such as businesses, facilities, restaurants, hotels, gas stations, retail stores, stadiums, police stations, and so on. The point of interest data record includes data that describes features of the represented point of interest. Each point of interest 308 includes a point of interest ID by which the record can be identified in the geographic database 216. The point of interest data record 308 also includes data identifying the location of the point of interest. The location information may provide the geographic coordinates (e.g., the latitude, longitude, and optionally altitude) of the represented point of interest, the address of the point of interest or another location identifier. The point of interest data record 308 also includes data identifying a type of point of interest, such as a category as well as sub-categories. For example, the type of point of interest may be a restaurant serving French food. The point of interest data record 308 also includes data identifying a business chain name if any is associated with the point of interest. The point of interest data record 308 may further include data that indicates a phone number, an associated website, hours of operation, and so on of the point of interest.

The geographic database 216 may also include other kinds of data. The other kinds of data 312 may represent other kinds of geographic features or anything else. The geographic database 216 also includes indexes 310. The indexes 310 may include various types of indexes that relate the different types of data to each other or that relate to other aspects of the data contained in the geographic database 216. For example, the indexes 310 may relate the nodes in the node data records 306 with the end points of a road segment in the road segment data records 304. As another example, the indexes 310 may relate point of interest data in the point of interest data records 308 with a road segment in the road segment data records 304.

### III. Advertisement Filtering

As discussed above in conjunction with Figure 2, the navigation system 200 includes navigation application software programs 208 that provide the various features and functions. In one embodiment, the functions and features may include an advertising filter function 230. The advertising filter function 230 blocks the presentation to the user of unwanted advertising messages.

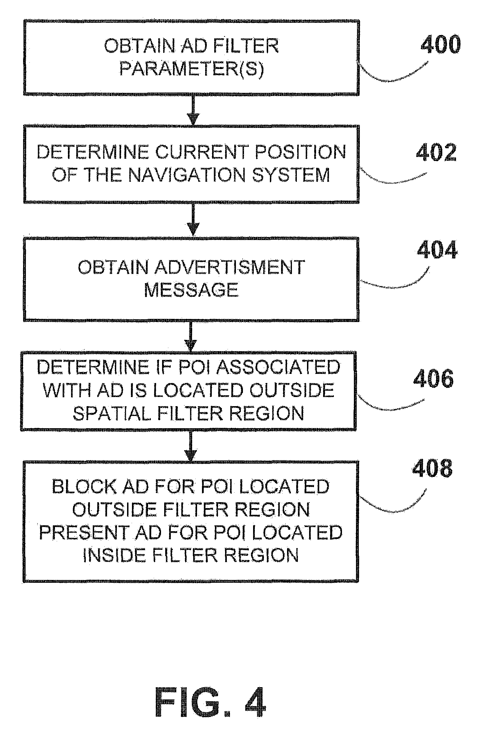

Figure 4 illustrates a flow chart of the steps for blocking unwanted advertising messages. At step 400, the advertising filter function 230 obtains at least one filter parameter for blocking the presentation of advertising messages to the user of the navigation system 200. In one embodiment, the user of the navigation system 200 establishes at least one filter parameter which is stored in memory associated with the navigation system 200 for use by the advertising filter function 230. The user of the navigation system 200 may establish the filter parameters with a menu process on the user interface 214 that lists various filter parameters along with various options.

In one embodiment, the filter parameter is spatially based to filter the advertising messages based on the location of the navigation system 200. For example, the user specifies the spatially based filter parameter as a ten kilometer radius around the current location of the navigation system 200; accordingly, any advertising messages for points of interest that are located more than 10 kilometers from the current location of the navigation system 200 are blocked. For convenience, this spatial area formed by the ten kilometer radius is called a spatial filter region. In a further embodiment, the user specifies that he or she wants to block all advertisements for points of interest that are a specified distance, driving distance, driving time, walking distance, walking time or travel distance/time by some other means of transport way from the current location of the user.

In another embodiment, the spatially based filter parameter specifies to block all advertisements for points of interest (businesses or services) that are located outside a specified city, neighborhood or other geographic region. In one embodiment, the user enters the city name, neighborhood name, administrative place name, zip code or other identifier of the geographic region through the user interface 214. In another embodiment, the user may specify the spatially based filter through a map display that allows the user to draw boundaries or polygons to specify the geographic area (spatial filter area) to block all advertisements for points of interest (businesses or services) that are located outside of the drawn area.

In yet another embodiment, the filter parameter is thematically based. In this embodiment, the filter parameter indicates a type or category of the point of interest to block the advertising messages for those points of interest having the specified type or category. For example, the user of the navigation system specifies that he or she wants to block advertisements from fast food restaurants. In one embodiment, the user selects the categories from a menu through the user interface 214. Furthermore, the user may specify specific brands or restaurant chain names to have blocked.

In a further embodiment, the filter parameter is time based. For example, the user of the navigation system 200 specifies that all advertising messages should be blocked during work hours, such as from nine in the morning to five in the evening. Other filter parameters are possible, such as blocking advertisement messages that have video content or audio content. Moreover, the filter parameters may be a combination of spatial, temporal and thematic filters. For example, the user specifies no advertising messages outside the geographic area surrounding his or her office for coffee shops during business hours.

At step 402, the advertising filter function 230 determines the current position of the navigation system. In one embodiment, the advertising filter function 230 obtains the current position of the navigation system 200 from the positioning system 210. The positioning system 210 determines the location, direction, orientation, etc., of the navigation system 200. The positioning system 210 may provide latitude and longitude coordinates. The advertising filter function 230 may further obtain position information from the positioning function 228, such as on which road segment the navigation system 200 is currently traveling on.

At step 404, the advertising filter function 230 obtains an advertising message 120 that was provided by the advertising service 152 for presentation to the user of the navigation system. In one embodiment, the advertising message was received by the communication system 212 as a one-way broadcast from the advertising provider 150. The received advertising message may be stored in memory associated with the navigation system temporarily.

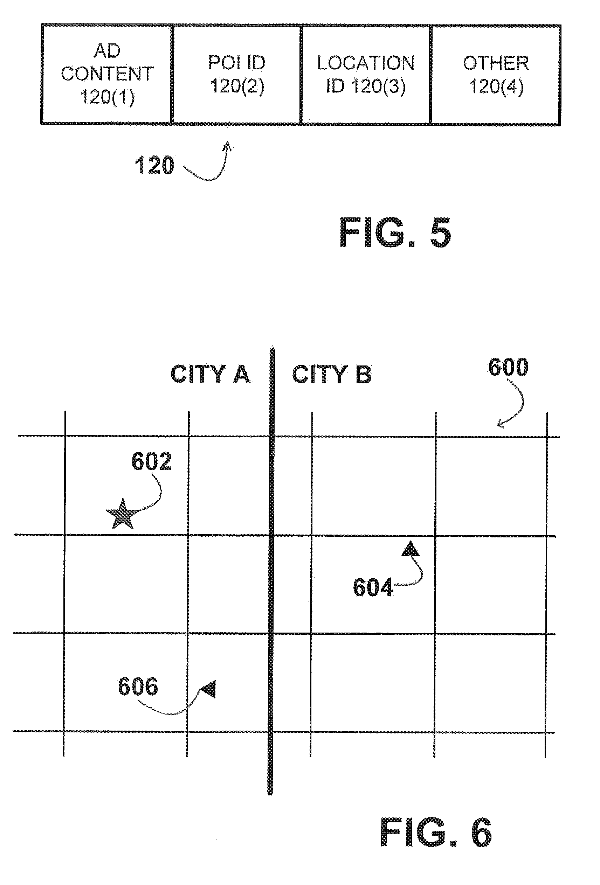

Figure 5 illustrates an example advertising message 120. The advertising message 120 can include various kinds of data. In the example shown in Figure 5, the data includes the following data components: an advertisement content 120(1), a point of interest ID 120(2), a location reference ID 120(3), and other data 120(4). The advertisement content includes data that represent the advertisement, such as images, videos, audio and other content that are used to present the advertisement to the user of the navigation system through the user interface 214. The point of interest ID component 120(2) includes a reference number that identifies the point of interest associated with the advertising message. In one embodiment, the point of interest ID component identifies a single point of interest associated with the advertising message. For example, the point of interest ID component 120(2) contains the identical point of interest ID as the geographic database 216 associated with the navigation system 200. Alternatively, the point of interest ID component identifies several points of interest associated with the advertisement, such as franchises of a business chain.

The location ID component 120(3) provides a location reference code that may be used by the advertising filter function 230 to identify the location of the point of interest associated with the advertising message. In one embodiment, the geographic database 216 associated with the navigation system include location reference code records that associate the location reference code with a predefined location in the geographic area that corresponds to the location of the point of interest. In another embodiment, the location ID component provides location information as latitude and longitude coordinates, an address, an administrative district or some other means to identify a location. The other data component 120(4) may provide any other information for the advertising message, such as an advertising message ID, playback instructions, links to additional information for the point of interest, and so on.

Referring to Figure 4, at step 406 the advertising filter function 230 determines whether the point of interest associated with the advertising message is located outside of the spatial filter region. In one embodiment, the advertising filter function 220 obtains data from location ID component 120(3) of the advertising message 120 to determine the location of the point of interest associated with the advertising message 120. The advertising filter function 230 uses data from the geographic database 216 to compare the location of the point of interest to the spatial filter region established by the spatial filter. In addition to evaluating the spatially based filter parameter, the advertising filter function 230 also evaluates the advertising message for any other filter parameters, such as thematic content, type of point of interest and time based filter.

Figure 6 illustrates a portion of a geographic region 600 and the current location 602 of the navigation system 200. For the illustrative embodiment described in conjunction with Figure 6, the filter parameter specified by the user of the navigation system is a spatial filter to block all advertising messages for points of interest located outside of CITY A. That is, the spatial filter region is defined by the boundaries of CITY A. For this example, the advertising filter application 230 uses the geographic database 216 that includes data representing the geographic region 600 to determine that the point of interest 604 is located in CITY B not CITY A and thus outside of the specified spatial filter region. The advertising filter application 230 determines that point of interest 606 is located in CITY A within the specified spatial filter region.

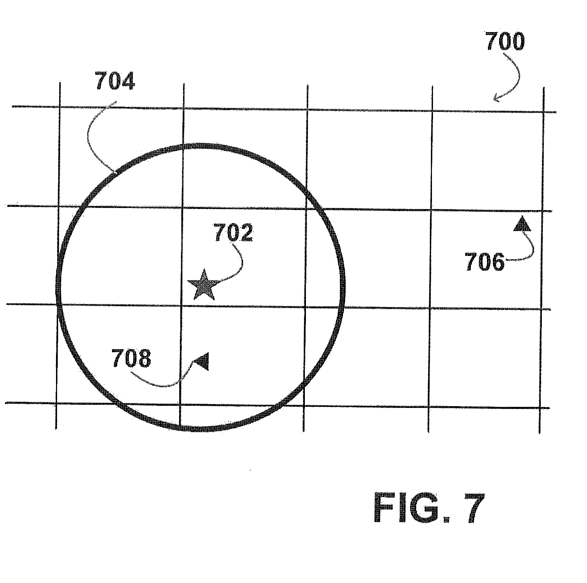

Figure 7 illustrates a portion of a geographic region 700 and the current location 702 of the navigation system 200. For the illustrative embodiment described in conjunction with Figure 7, the filter parameter specified by the user of the navigation system is a spatial filter to block all advertising messages for points of interest located outside of a ten kilometer radius from the current position of the navigation system. The circle 704 illustrates this ten kilometer spatial filter region centered at the current location 702 of the navigation system. The advertising filter application 230 uses the geographic database 216 that includes data representing the geographic region 700 to determine that the point of interest 706 is located outside of the specified 10 kilometer range and that the point of interest 708 is located within the specified 10 kilometer range.

Referring to Figure 4, at step 408 the advertising filter function 230 blocks the advertising message associated with the point of interest located outside of the spatial filter region, and the advertising filter function 230 presents the advertising message associated with the point of interest located within the spatial filter region. The blocked advertising messages are disposed in trash. The non-blocked advertising messages have the advertising content, such as text, video and audio presented through the user interface 214 to the user of the navigation system. For the example illustrated in Figure 6, the advertising message associated with the point of interest 604 is blocked and is not presented to the user of the navigation system, whereas the advertising message associated with the point of interest 606 is presented to the user of the navigation system. For the example illustrated in Figure 7, the advertising message associated with the point of interest 706 is blocked and is not presented to the user of the navigation system, whereas the advertising message associated with the point of interest 708 is presented to the user of the navigation system.

In addition to blocking advertising messages based on the spatial filter parameter, the advertising filter function 230 also blocks and passes the advertising message for any other filter parameters, such as thematic content, type or category of point of interest, time based filters and combinations thereof. For example, if the filter parameter specifies no advertising messages from fast food restaurants, the advertising filter application 230 uses the geographic database 216 that includes data representing the point of interest associated with the advertising message include data indicating the type or category of point of interest, such as type of restaurant. If the advertising filter function 230 determines that the point of interest associated with the advertising message is of the fast food restaurant type, the advertising message is blocked. If the advertising filter function 230 determines that the point of interest associated with the advertising message is not of the fast food restaurant type, the advertising message is presented to the user through the user interface 214.

In one embodiment, the advertising filter function 230 maintains a record of which advertising messages are blocked and which advertising messages are presented to the user. This record is then supplied to the advertising provider 150 for evaluation. In addition, the navigation system maintains a record of the user's interaction with the advertising messages that were presented. For example, the navigation system records whether the navigation system travels or does not travel to the location of the point of interest after viewing the advertising message for the point of interest as well as whether the user requested additional information regarding the point of interest.

Although the above advertising filter function 230 has been described as being performed on the navigation system 200, the advertising filter function 230 may be performed on any computer platform. For example, the advertising filter function 230 may be performed on a mobile telephone or any computer.

The above advertising filter feature has been described for an advertising system 110 that provides a one-way broadcast of the advertising messages without the user of the navigation system requesting such advertising messages. In an alternative embodiment, the advertising messages may be provided as part of a two-way communication system, such as in response to the user of the computer platform requesting information. In an exemplary embodiment, the user of the computer platform requests a local search for a destination or business located in the geographic region. The advertising server 152 obtains this request and prepares a response that includes at least one advertising message. The response and advertising message are then sent to the user's computer platform. The user's computer platform evaluates the received advertising message in a similar manner as discussed above.

The above advertising filter feature has been described as being executed on the navigation system 200 associated with the vehicle 104; however, some or all of the steps may be executed remote from the navigation system 200 associated with the vehicle 104. In this embodiment, the advertising server 152 performs some or all of the steps discussed in conjunction with Figure 4. For example, the advertising server 152 obtains ad filter parameters from memory associated with the advertising server 152 that were previously supplied by the user. The advertising server 152 also determines the current position of the user's computing device. Prior to sending the advertising message to the user's computing device, the advertising server 152 obtains the advertising message from the ad database 160 and determines if the point of interest associated with the advertising message is outside the spatial filter region. Additionally, the advertising server 152 evaluates the advertising message for other filter parameters. In this embodiment, the advertising server 152 will not transmit the advertising messages that are blocked due to the filter parameters and will transmit only the advertising messages to the user that are passed for presentation to the user.

It is intended that the foregoing detailed description be regarded as illustrative rather than limiting and that it is understood that the following claims including all equivalents are intended to define the scope of the invention. The claims should not be read as limited to the described order or elements unless stated to that effect. Therefore, all embodiments that come within the scope and spirit of the following claims and equivalents thereto are claimed as the invention.

## Claims

1. A method of operating a computer platform to block advertising messages, the method comprising:
obtaining a spatially based advertising filtering parameter defining a portion of a geographic region;
identifying a current location of the computer platform;
obtaining an advertising message;
identifying a location of a business associated with the advertising message;
determining whether the location of the business is located outside of the portion of the geographic region defined by the spatially based advertising filtering parameter; and
if so, blocking a presentation of the advertising message.

2. The method of Claim 1 wherein the spatially based advertising filter parameter specifies an administrative district.

3. The method of Claim 1 wherein the spatially based advertising filter parameter specifies a distance from a current position of the computer platform.

4. The method of Claim 1 wherein the spatially based advertising filter parameter specifies a distance from a specified location.

5. The method of Claim 1 wherein the spatially based advertising filter parameter is defined by a user of the computer platform.

6. The method of Claim 1 wherein the advertising message includes an identifier of the business associated with the advertising message.

7. The method of Claim 1 wherein another filter parameter is category or temporally based.

8. The method of Claim 1 wherein the advertising message is obtained without a request from the computer platform.

9. The method of Claim 1 wherein the advertising message is obtained after a request from the computer platform.

10. A system for operating a computer platform to block advertising messages comprising:
a processor,
a geographic database associated with the processor, and
an advertising filtering program executed on the processor, wherein the advertising filtering program blocks a presentation of an advertising message for a point of interest according to a filtering parameter.

11. The system of Claim 10 wherein the filtering parameter includes at least one from a group comprising: a spatially based filter parameter, a category based filter parameter and a time based filter parameter.

12. The system of Claim 11 wherein the spatially based filter parameter specifies a distance from a current position of the navigation system and the advertising message for the point of interest located a distance greater from the current position than the specified distance is blocked by the advertising filtering program.

13. The system of Claim 10 wherein the filter parameter is defined by a user of the system.

14. The system of Claim 10 wherein the advertising message includes an identifier of one or both of: (a) the point of interest associated with the advertising message; and (b) the location of the point of interest associated with the advertising message.

15. A computer program which , when executed by a processor, causes the processor to carry out a method according to any one of claims 1 to 9.
